# EUROPÄISCHE PATENTSCHRIFT

(11) **EP 1 422 815 B1**
(45) Veröffentlichungstag und Bekanntmachung des Hinweises auf die Patenterteilung: **19.12.2007**
(21) Anmeldenummer: 03103706.2
(22) Anmeldetag: 07.10.2003
(51) Int. Cl.: H02M 3/158

(54) **Verfahren und Vorrichtung zur Ansteuerung wenigstens eines elektrischen Verbrauchers**
Method and apparatus for controlling at least one consumer device
Procédé et dispositif pour commander au moins un consommateur électrique

(30) Priorität: 20.11.2002 DE 10253971
(43) Veröffentlichungstag der Anmeldung: 26.05.2004
(73) Patentinhaber: ROBERT BOSCH GMBH, 70442 Stuttgart (DE)
(72) Erfinder: Degler, Traugott, 70825, Korntal (DE); Koch, Andreas, 74321, Bietigheim-Bissingen (DE); Blum, Oliver, 74193, Schwaigern (DE)

(56) Entgegenhaltungen:
- EP-A- 0 994 499
- EP-A- 1 065 677
- DE-A- 10 022 954
- DE-A- 19 823 850
- DE-A- 19 912 966

## Beschreibung

### Stand der Technik

Die Erfindung betrifft ein Verfahren und eine Vorrichtung zur Ansteuerung wenigstens eines elektrischen Verbrauchers gemäß den Oberbegriffen der unabhängigen Ansprüche.

Ein Verfahren und eine Vorrichtung zur Ansteuerung wenigstens eines elektrischen Verbrauchers ist aus der DE 100 22 954 bekannt. Dort wird eine Ansteuerschaltung zur Ansteuerung von Magnetventilen für die Kraftstoffzumessung in einer Brennkraftmaschine beschrieben. Die einzelnen Verbraucher stehen dabei jeweils über einen gemeinsamen High-Side-Schalter und über jeweils einen Low-Side-Schalter mit einem Energiespeicher in Form eines Kondensators in Verbindung. Der Kondensator wird dabei von einer externen Versorgungsspannung über einen induktiven Verbraucher sowie ein Schaltmittel aufgeladen. Dabei sind die Low-Side-Schalter über ein Messmittel mit einer Masseleitung verbunden. Über diese Masseleitung stehen die Verbraucher über ein weiteres Strommessmittel mit dem Energiespeicher in Verbindung. Nachteilig bei dieser Anordnung ist es, dass der Strom, der beim Abschalten aus den Verbrauchern in den Energiespeicher zurückgewonnen wird, nicht unabhängig von der Aufladung des Energiespeichers erfasst werden kann. Des Weiteren ist der Stromfluss in den Magnetventilen während der Bestromung aus dem Energiespeicher und der Stromfluss zum Nachladen des Energiespeichers miteinander über die gemeinsame Masseleitung verkoppelt.

### Vorteile der Erfindung

Dadurch, dass das Strommessmittel bzw. die Strommessmittel mit dem Energiespeicher in Verbindung stehen, sind die Stromkreise zum Nachladen des Energiespeichers unabhängig vom Stromkreis zur Ansteuerung der Verbraucher. Dabei ist die Erfassung des Stroms mit unterschiedlichen Strommessmittel unabhängig voneinander. Des Weiteren ist es möglich, während des Abschaltvorganges und bei der Rückgewinnung der Energie aus den Verbrauchern und der Rückführung in den Energiespeicher den Strom zu erfassen.

### Zeichnungen

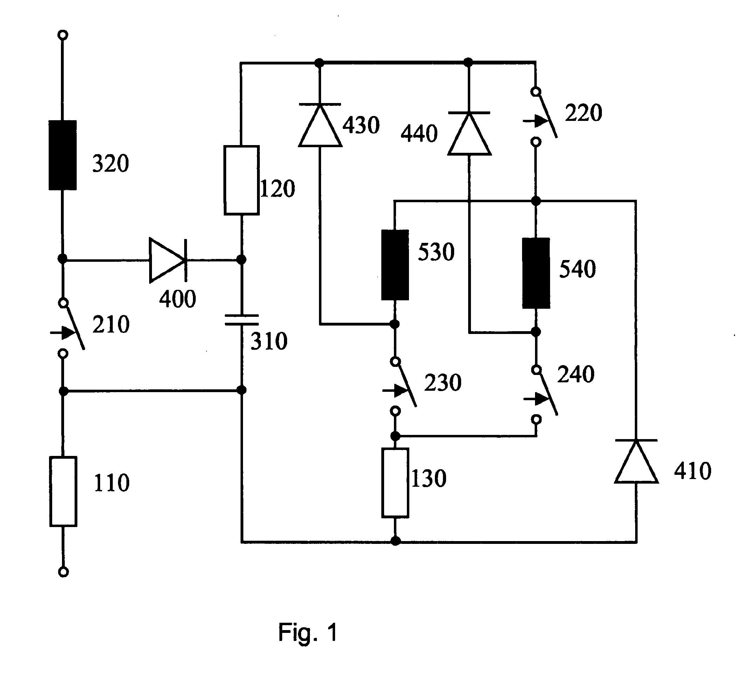

Die Erfindung wird nachstehend anhand der in der Zeichnung dargestellten Ausführungsformen erläutert. Die Figuren 1 bis 3 zeigen verschiedene Ausführungsformen der erfindungsgemäßen Vorgehensweise.

### Beschreibung der Ausführungsformen

In Figur 1 ist eine erste Ausführungsform der erfindungsgemäßen Vorgehensweise dargestellt. Ein erstes Strommessmittel 110 steht über ein erstes Schaltmittel 210 mit einem induktiven Element 320 in Verbindung. Diese drei Elemente bilden eine Reihenschaltung, die zwischen den beiden Anschlüssen einer Versorgungsspannung angeordnet sind. Der Verbindungspunkt zwischen dem induktiven Energiespeicher 320 und dem ersten Schaltmittel 210 steht über eine Diode 400 mit einem Energiespeicher 310 und einem zweiten Strommessmittel 120 in Verbindung. Der erste Energiespeicher 310 ist vorzugsweise als Kondensator ausgebildet. Die Bauelemente 210, 310, 320 und 400 bilden einen DC/DC-Wandler.

Der zweite Anschluss des zweiten Strommessmittels 120 steht über ein zweites Schaltmittel 220 einem ersten Verbraucher 530 und einem zweiten Verbraucher 540 in Verbindung. Des Weiteren steht das Strommessmittel 120 mit seinem zweiten Anschluss über eine Löschdiode 430 mit dem zweiten Anschluss des Verbrauchers 530 in Verbindung. Entsprechend steht der zweite Anschluss des zweiten Strommessmittels 120 über eine weitere Löschdiode 440 mit dem zweiten Anschluss des zweiten Verbrauchers 540 in Verbindung. Der erste Anschluss des ersten Verbrauchers 530 und der erste Anschluss des zweiten Verbrauchers 540 steht ferner über eine Freilaufdiode 410 mit dem zweiten Anschluss des Energiespeichers 310 in Kontakt. Der zweite Anschluss eines des ersten Verbrauchers 530 steht über ein drittes Schaltmittel 230, das auch als Low-Side-Schalter bezeichnet wird, und ein drittes Strommessmittel 130 mit dem zweiten Anschluss des Energiespeichers 310 in Kontakt. Entsprechend steht der zweite Anschluss des zweiten Verbrauchers 540 über einen zweiten Low-Side-Schalter 240 und das dritte Strommessmittel 130 ebenfalls mit dem zweiten Anschluss des Energiespeichers 310 in Kontakt.

Bei der dargestellten Ausführungsform sind lediglich zwei Verbraucher dargestellt. Die erfindungsgemäße Vorgehensweise ist auch bei einer größeren oder kleineren Anzahl von Verbrauchern einsetzbar. Bei der bevorzugten Ausführungsform ist vorgesehen, dass die ersten Anschlüsse der Verbraucher über ein gemeinsames Schaltmittel 220, das auch als High-Side-Schalter bezeichnet wird, und das zweite Strommessmittel 120 mit dem ersten Anschluss des Energiespeichers 310 in Verbindung stehen. Bei abgewandelten Ausführungsformen kann auch vorgesehen sein, dass für jeden Verbraucher ein Schaltmittel 220 vorgesehen ist, bzw. dass für mehrere Verbraucher oder Gruppen von Verbrauchern ein Schaltmittel 220 vorgesehen ist. Entsprechendes gilt auch für die Low-Side-Schalter. Hier kann ebenfalls vorgesehen sein, dass Gruppen von Verbrauchern mit einem gemeinsamen Low-Side-Schalter angesteuert werden.

Besonders vorteilhaft bei dieser Ausführungsform ist es, dass alle Strommessmitel unmittelbar mit dem Energiespeicher verbunden sind. Dadurch können alle Ströme, die in oder aus dem Energiespeicher fließen unabhängig von einander erfasst werden.

Durch Schließen des ersten Schaltmittel 210 fließt der Strom in der Versorgungsspannung durch das induktive Element 320. Der hierbei fließende Strom kann mittels des ersten Strommessmittels 110 erfasst und gegebenenfalls auf vorgebbare Werte eingeregelt werden. Beim Öffnen des ersten Schaltmittels 210 wird die Energie, die im induktiven Element 320 gespeichert ist, über die Diode 400 in den Energiespeicher 310 umgeladen. Dadurch lädt sich der Energiespeicher 310 auf eine gegenüber der Versorgungsspannung erhöhte Spannung auf.

Bei den Verbrauchern handelt es sich vorzugsweise um Magnetventile, die zur Kraftstoffzumessung verwendet werden. Soll eine Kraftstoffeinspritzung erfolgen, werden das zweite Schaltmittel 220 sowie der jeweilige Low-Side-Schalter, der dem Verbraucher zugeordnet ist, dem Kraftstoff zumessen soll, geschlossen. Dies bewirkt einen Stromfluss vom Energiespeicher 310 über das zweite Strommessmittel 120 durch den High-Side-Schalter 220, den Verbraucher und den entsprechenden Low-Side-Schalter sowie das dritte Stromessmittel 130 zurück zum Energiespeicher 310. Durch Öffnen und Schließen des zweiten Schaltmittels 220 wird der Strom, der durch den Verbraucher fließt und mittels des dritten Strommessmittels 130 erfasst wird, auf vorgegebene Werte eingeregelt. Beim Öffnen des Schaltmittels 220 fließt die freiwerdende Energie über die Freilaufdiode 410, das dritte Strommessmittel 130, den entsprechenden Low-Side-Schalter und den entsprechenden Verbraucher.

Am Ende der Ansteuerung bzw. beim Übergang von einem hohen Strom auf einen niedrigeren Stromwert wird mindestens ein Schaltmittel 220 oder 230 bzw. 240 geöffnet. Zur Rückspeisung der Energie des Verbrauchers in den Energiespeicher und zum schnellen Abbau des im Verbraucher fließenden Stromes wird der entsprechende Low-Side-Schalter des Verbrauchers und der High-Side-Schalter 220 geöffnet. Dies bewirkt einen Stromfluss durch die Löschdiode 430, das zweite Strommessmittel 120, den Energiespeicher 310 und die Freilaufdiode 410. Dadurch wird die in den Verbrauchern freiwerdende Energie in den Energiespeicher 310 zurückgeleitet. Der hierbei fließende Strom wird durch das zweite Strommessmittel 120 erfasst.

Dies bedeutet, bei dieser dargestellten Anordnung ist bei dem Ladevorgang des Energiespeichers mittels des DC/DC-Wandlers eine Strommessung möglich. Des Weiteren ist bei der üblichen Bestromung als auch bei der Rückladung der Energie aus den Verbrauchern in den Energiespeicher 310 eine Messung der dabei auftretenden Ströme möglich. Die Ströme des DC/DC-Wandlers und die Bestromung des Verbrauchers können unabhängig voneinander zu jeder Zeit gemessen werden.

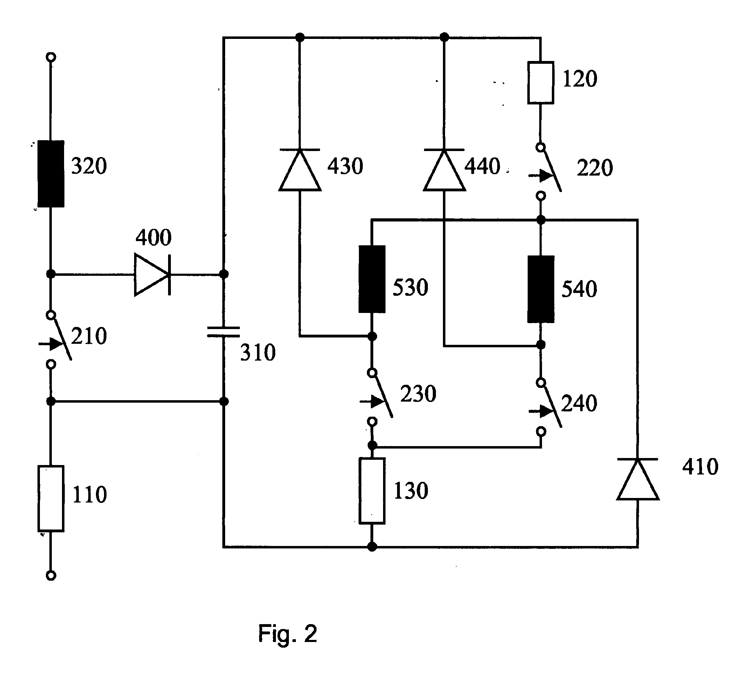

Die vereinfachte Ausführungsform der Figur 2 unterscheidet sich von der Ausführungsform der Figur 1 darin, dass das zweite Strommessmittel 120 das zweite Schaltmittel 220 mit dem Verbindungspunkt zwischen den Löschdioden und dem Energiespeicher 310 verbindet. Dies bedeutet, mit dieser Anordnung ist keine Messung des Stroms unabhängig vom Ladevorgang des Energiespeichers 310 während der Energierückladung aus den Verbrauchern in den Energiespeicher 310 möglich.

Vorteilhaft bei dieser Anordnung ist, dass der Stromfluss in dem ersten Messmittel 110 unabhängig vom Stromfluss in den Verbrauchern und damit dem Stromfluss in dem dritten Strommessmittel 130 ist. Dies wird dadurch erreicht, der Verbindungspunkt zwischen Strommessmittel 130 und der Freilaufdiode 410 nicht mit Masse, sondern mit dem Verbindungspunkt zwischen dem Strommessmittel 110 und dem ersten Schaltmittel 210 verbunden ist bzw. dass dieser Verbindungspunkt zwischen dem dritten Strommessmittel 130 und der Freilaufdiode 410 unmittelbar mit dem Energiespeicher 310 in Verbindung steht. Damit ist gewährleistet, dass der Stromkreis zum Nachladen des Energiespeichers 310 über den DC/DC-Wandler unabhängig ist vom Stromkreis zur Ansteuerung der Verbraucher. D. h. durch das erste Strommessmittel 110 fließt lediglich der Strom, der zum Laden des Energiespeichers 310 aus dem Energiespeicher 320 erforderlich ist. Durch das dritte Strommessmittel 130 fließt lediglich der Strom, der durch den Verbraucher bei geschlossenem Low-Side-Schalter fließt.

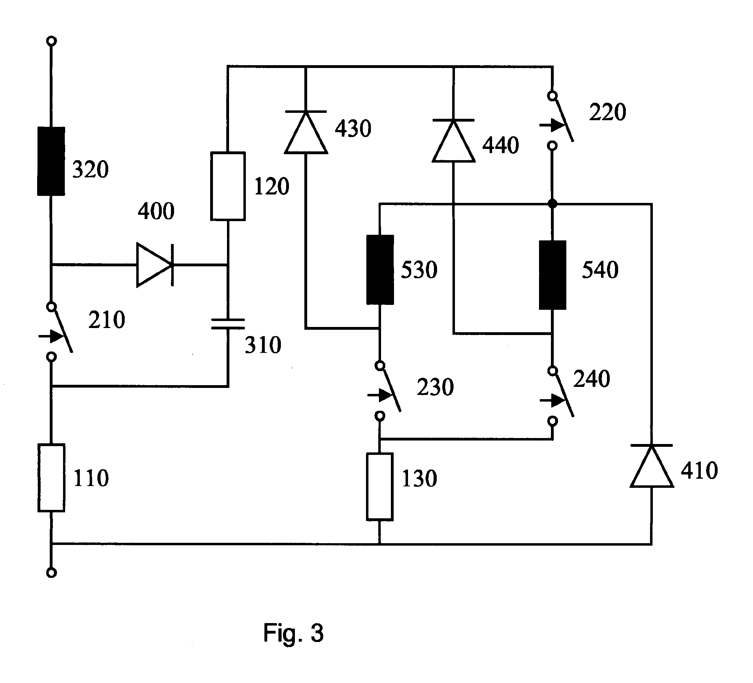

Die Ausführungsform der Figur 3 unterscheidet sich von der Ausführungsform der Figur 1 darin, dass, der Verbindungspunkt zwischen drittem Strommessmittel 130 und der Freilaufdiode 410 unmittelbar mit Masse verbunden ist, wobei aber das Strommessmittel 120 entsprechend wie in Figur 1 angeordnet ist, d. h. das Strommessmittel 120 erfasst auch den Strom, der durch die Löschdiode 430 und 440 fließt. Diese Anordnung hat den Vorteil, dass eine Messung des Stroms mittels des Strommessmittels 120 während dem Abschaltvorgang der Ventile möglich ist.

Allen Ausführungsformen gemeinsam ist, dass wenigstens eines der Strommessmittel 120 oder 130 unmittelbar mit dem Energiespeicher 310 verbunden ist und den Stromwert erfasst, der in den Energiespeicher oder aus dem Energiespeicher herausfließt. Falls das zweite Strommessmittel 120 unmittelbar am Energiespeicher angeordnet ist, ist eine Erfassung des rückgeführten Stroms, der vom Verbraucher in den Energiespeicher 310 fließt, möglich. Ist das dritte Strommessmittel 130 unmittelbar am Energiespeicher angeordnet, so ist eine Erfassung des Stroms, der durch den Verbraucher fließt, ohne Beeinflussung des DC/DC-Wandlers möglich. Deshalb ist vorgesehen, dass die jeweiligen Strommessmittel ummittelbar, d. h. ohne weitere dazwischengeschaltete Bauelemente mit dem Energiespeicher 310 in Verbindung stehen.

Bei der Ausführungsform gemäß Figur 1 und 2 verbindet das dritte Strommessmittel 130 die Low-Side-Schalter unmittelbar mit dem Energiespeicher 310. Gemäß Ausführungsform der Figur 1 und 2 ist die Freilaufdiode 410 ebenfalls unmittelbar mit dem Energiespeicher 310 verbunden. Bei der Ausführungsform gemäß Figur 1 und Figur 3 verbindet das zweite Strommessmittel 120 das zweite Schaltmittel 220 sowie die Löschdioden 430 bzw 440 mit dem Energiespeicher 310.

## Patentansprüche

1. Vorrichtung zur Ansteuerung wenigstens eines elektrischen Verbrauchers (530, 540) mit einem induktiven Element (320), einem ersten Schaltmittel (210), einem ersten Strommessmittel (110) und mit einem Energiespeicher (310), der beim Öffnen des ersten Schaltmittels (210) mit der Energie des induktiven Elements (3 0) geladen wird, wobei wenigstens ein Verbraucher (530, 540) über ein zweites Schaltmittel (220) mit einem ersten Anschluss des Energiespeichers in Verbindung steht, wobei wenigstens ein Verbraucher (530, 540) über ein drittes Schaltmittel (230, 240) mit einem zweiten Anschluss des Energiespeichers (310) in Verbindung steht, und wobei ein Stromfluss durch den wenigstens einen Verbraucher (530, 540) und den Energiespeicher (310) mittels eines zweiten (120) und/oder eines dritten Strommessmittels (130) erfassbar ist, **dadurch gekennzeichnet, dass** das zweite und/oder das dritte Strommittel unmittelbar mit dem Energiespeicher in Verbindung stehen sodaß der Stromfluss unabhänging von der Ladung der Energiespeichers gemessen wird.

2. Vorrichtung nach Anspruch 1, **dadurch gekennzeichnet, dass** das dritte (130) Strommessmittel das dritte Schaltmittel (230, 240) unmittelbar mit dem Energiespeicher (310) verbindet.

3. Vorrichtung nach Anspruch 1 oder 2, **dadurch gekennzeichnet, dass** das zweite Strommessmittel (120) das zweite Schaltmittel (220) unmittelbar mit dem Energiespeicher (310) verbindet.

4. Vorrichtung nach einem der vorhergehenden Ansprüche, **dadurch gekennzeichnet, dass** das dritte Strommessmittel (130) und eine Freilaufdiode (410) mit dem Energiespeicher (310) verbunden sind.

5. Vorrichtung nach einem der vorhergehenden Ansprüche, **dadurch gekennzeichnet, dass** das zweite Strommessmittel (120) eine Löschdiode (430, 440) mit dem Energiespeicher (310) verbindet.

## Claims

1. Apparatus for driving at least one electrical load (530, 540), comprising an inductive element (320), a first switching means (210), a first current measurement means (110) and an energy storage device (310) which is charged with the energy of the inductive element (320) when the first switching means (210) is open, with at least one load (530, 540) being connected to a first connection of the energy storage device via a second switching means (220), with at least one load (530, 540) being connected to a second connection of the energy storage device (310) via a third switching means (230, 240), and it being possible to detect a current flow through the at least one load (530, 540) and the energy storage device (310) by means of a second current measurement means (120) and/or a third current measurement means (130), **characterized in that** the second and/or the third current measurement means are connected directly to the energy storage device, so that the current flow is measured independently of the charge of the energy storage device.

2. Apparatus according to Claim 1, **characterized in that** the third current measurement means (130) connects the third switching means (230, 240) directly to the energy storage device (310).

3. Apparatus according to Claim 1 or 2, **characterized in that** the second current measurement means (120) connects the second switching means (220) directly to the energy storage device (310).

4. Apparatus according to one of the preceding claims, **characterized in that** the third current measurement means (130) and a free-wheeling diode (410) are connected to the energy storage device (310).

5. Apparatus according to one of the preceding claims, **characterized in that** the second current measurement means (120) connects a suppressor diode (430, 440) to the energy storage device (310).

## Revendications

1. Dispositif de commande d'au moins un consommateur électrique (530, 540) ayant un élément inductif (320), un premier moyen de commutation (210) et un premier moyen de mesure de courant (110) ainsi que d'un accumulateur d'énergie (310) qui, à l'ouverture du premier moyen de commutation (210) se charge avec l'énergie de l'élément inductif (320),
ce consommateur (530, 540) étant relié par un second moyen de commutation (220) à une première borne de l'accumulateur d'énergie,
le consommateur (530, 540) étant relié par un troisième moyen de commutation (230, 240) à une seconde borne de l'accumulateur d'énergie (310),
on saisit le courant passant par le consommateur (530, 540) et l'accumulateur d'énergie (310) à l'aide d'un second moyen de mesure de courant (120) et/ou d'un troisième moyen de mesure de courant (130),
**caractérisé en ce que**
le second et/ou le troisième moyen de mesure de courant sont directement reliés à l'accumulateur d'énergie de façon que le passage du courant soit mesuré indépendamment de la charge de l'accumulateur d'énergie.

2. Dispositif selon la revendication 1,
**caractérisé en ce que**
le troisième moyen de mesure de courant (130) relie le troisième moyen de commutation (230, 240) directement à l'accumulateur d'énergie (310).

3. Dispositif selon la revendication 1 ou 2,
**caractérisé en ce que**
le second moyen de mesure de courant (120) relie directement le second moyen de commutation (220) à l'accumulateur d'énergie (310).

4. Dispositif selon l'une des revendications précédentes,
**caractérisé en ce que**
le troisième moyen de mesure de courant (130) et une diode de roue libre (410) sont reliés à l'accumulateur d'énergie.

5. Dispositif selon l'une des revendications précédentes,
**caractérisé en ce que**
le second moyen de mesure de courant (120) relie une diode d'extinction (420, 450) à l'accumulateur d'énergie (310).
